(19) **Europäisches Patentamt**
**European Patent Office**
**Office européen des brevets**

(11) **EP 2 898 608 B1**

(12) **FASCICULE DE BREVET EUROPEEN**

(45) Date de publication et mention
de la délivrance du brevet:
**09.11.2016 Bulletin 2016/45**

(51) Int Cl.:
*H04B 7/185* (2006.01)       *H03M 13/00* (2006.01)
*H04L 1/00* (2006.01)

(21) Numéro de dépôt: **13763110.7**

(22) Date de dépôt: **19.09.2013**

(86) Numéro de dépôt international:
**PCT/EP2013/069530**

(87) Numéro de publication internationale:
**WO 2014/044781 (27.03.2014 Gazette 2014/13)**

(54) **PROCÉDÉ DE TRANSMISSION D'UNE INFORMATION ENTRE UNE PLURALITÉ DE STATIONS RADIOÉLECTRIQUES, ET RÉSEAU DE TRANSMISSION ASSOCIÉ**

VERFAHREN ZUR ÜBERTRAGUNG VON EINER INFORMATION ZWISCHEN MEHREREN FUNKSTATIONEN UND ÜBERTRAGUNGSNETZ DAFÜR.

METHOD OF TRANSMISSION OF AN INFORMATION BETWEEN A PLURALITY OF RADIO STATIONS ET TRANSMISSION NETWORK THEREFOR.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.09.2012 FR 1202521**

(43) Date de publication de la demande:
**29.07.2015 Bulletin 2015/31**

(73) Titulaire: **THALES**
**92200 Neuilly-sur-Seine (FR)**

(72) Inventeurs:
• **GARRIDO, Eric**
**F-92622 Gennevilliers Cedex (FR)**
• **LEFRANC, David**
**F-92622 Gennevilliers Cedex (FR)**
• **DE MOEGEN, Thibault**
**F-92622 Gennevilliers Cedex (FR)**

(74) Mandataire: **Lavoix**
**2, place d'Estienne d'Orves**
**75441 Paris Cedex 09 (FR)**

(56) Documents cités:
**WO-A1-85/01625        WO-A2-2012/098157**
**FR-A1- 2 898 000      US-A1- 2009 060 064**

**EP 2 898 608 B1**

**EP 2 898 608 B1**

**Description**

La présente invention concerne un procédé de transmission d'une information entre une pluralité de stations radioélectriques, chaque station comportant un émetteur et un récepteur, l'information comportant NbMot mots de données, NbMot étant un nombre entier strictement supérieur à 1.

La présente invention concerne également un réseau de transmission comprenant la pluralité de stations radioélectriques.

L'invention s'applique en particulier au cas où l'information à transmettre est de taille supérieure à la taille d'un paquet radio dédié au transport de cette information. L'invention concerne également le cas où il est nécessaire de répéter plusieurs fois l'envoi de l'information afin de garantir avec une forte probabilité, la probabilité minimale dépendant de la qualité de service souhaitée et étant par exemple égale à 0,99, la réception correcte d'au moins un exemplaire de ladite information.

L'invention s'applique notamment à un réseau de transmission fonctionnant en évasion de fréquences dans un plan de fréquences prédéterminé, la fréquence utilisée pour la transmission de données étant conservée durant un palier, appelé palier EVF (pour EVasion de Fréquences), et changeant d'un palier EVF à l'autre selon une loi de changement de fréquences.

On connait un procédé de transmission du type précité. L'information à transmettre est véhiculée dans une trame comportant NbMot mots de données $T_1, ..., T_{NbMot}$, et définie de la manière suivante :

$$[T_1 \| T_2 \| ... \| T_{NbMot}],$$

où $\|$ symbolise une concaténation de données.

La transmission de la trame est répétée plusieurs fois afin de garantir avec une forte probabilité la réception correcte d'au moins un exemplaire de l'information. Le procédé de transmission comporte un mécanisme de synchronisation entre les trames, pour permettre à la station réceptrice de bien identifier chaque trame transmise.

Du fait de la répétition, l'un des NbMot mots de la trame, tel que le premier mot $T_1$, contient également un indicateur de trame TPS, ledit indicateur TPS évoluant au cours des répétitions et permettant de numéroter les trames transmises successivement.

Une information de synchronisation comprend alors le mécanisme de synchronisation afin que la station réceptrice reconnaisse la découpe en trames et l'indicateur de trame TPS. A chaque répétition de la trame, la valeur, notée TPS(i), de l'indicateur de trame TPS évolue de sorte que la station réceptrice sache globalement positionner le paquet reçu.

La station émettrice émet alors les mots de données $T_1, ..., T_{NbMot}$ dans différents paquets de la manière suivante :

- paquet numéro 1 contenant le premier mot $T_1$ avec l'indicateur de trame de valeur TPS(1),
- paquet numéro 2 contenant le deuxième mot $T_2$, ...,
- paquet numéro NbMot contenant le mot $T_{NbMot}$, les paquets numérotés 1 à NbMot formant la première trame,
- paquet numéro NbMot+1 contenant le premier mot $T_1$ avec l'indicateur de trame de valeur TPS(2),
- paquet numéro NbMot+2 contenant le deuxième mot $T_2$, ...,
- paquet numéro 2xNbMot contenant le mot $T_{NbMot}$, les paquets numérotés NbMot+1 à 2xNbMot formant la deuxième trame,
- paquet numéro 2xNbMot+1 contenant le premier mot $T_1$ avec l'indicateur de trame de valeur TPS(3),
- paquet numéro 2xNbMot+2 contenant le deuxième mot $T_2$, ..., et ainsi de suite jusqu'à un nombre maximal de trames, défini en fonction d'une probabilité que la station réceptrice obtienne correctement chacun des mots de données $T_1, ..., T_{NbMot}$, cette probabilité étant également appelée qualité de service.

Le mot $T_1$ avec l'indicateur de trame dont la valeur TPS(i) évolue est répété via des paquets ayant un numéro congru à 1 modulo NbMot. De même, le mot $T_2$ est émis dans des paquets ayant un numéro congru à 2 modulo NbMot, et ainsi de suite. Le mot $T_{NbMot}$ est répété dans des paquets ayant un numéro congru à 0 modulo NbMot.

Par conséquent, pour que la station réceptrice obtienne une copie de chaque mot $T_1, ..., T_{NbMot}$, elle doit être en mesure de décoder correctement NbMot paquets n'appartenant pas nécessairement à la même trame, mais ayant chacun un numéro différent en le considérant modulo NbMot.

FR 2 898 000 A1 décrit un procédé de transmission d'une information entre une pluralité de stations radioélectriques, selon le préambule de la revendication 1.

Toutefois, avec un tel procédé de transmission, le nombre maximal de trames transmises afin de garantir la qualité de service souhaitée est élevé, et le réseau de transmission est alors particulièrement lent à transmettre l'information.

Le but de l'invention est donc de proposer un procédé et un réseau de transmission permettant de réduire la quantité de données transmises par la station émettrice à destination de la ou des stations réceptrices, pour transporter ladite information comportant les mots de données $T_1$, ..., $T_{NbMot}$, tout en offrant la même qualité de service.

A cet effet, l'invention a pour objet un procédé de transmission selon la revendication 1.

Suivant d'autres aspects avantageux de l'invention, le procédé de transmission comprend une ou plusieurs des caractéristiques suivantes, prises isolément ou suivant toutes les combinaisons techniquement possibles, selon les revendications dépendantes 2 à 7.

L'invention a pour objet un réseau de transmission d'une information, selon la revendication 8.

Les caractéristiques et avantages de l'invention apparaitront à la lecture de la description qui va suivre, donnée uniquement à titre d'exemple non limitatif, et faite en référence aux dessins annexés, sur lesquels :

- la figure 1 est une représentation schématique d'une station radioélectrique d'un réseau de transmission selon l'invention,
- la figure 2 est une représentation schématique de l'information à transmettre comportant NbMot mots de données, NbMot étant un nombre entier strictement supérieur à 1,
- la figure 3 est une représentation schématique de l'émission successive de NbRepet paquets de données, NbRepet étant un nombre entier strictement supérieur à 1, et
- la figure 4 est un organigramme d'un procédé de transmission de l'information selon l'invention.

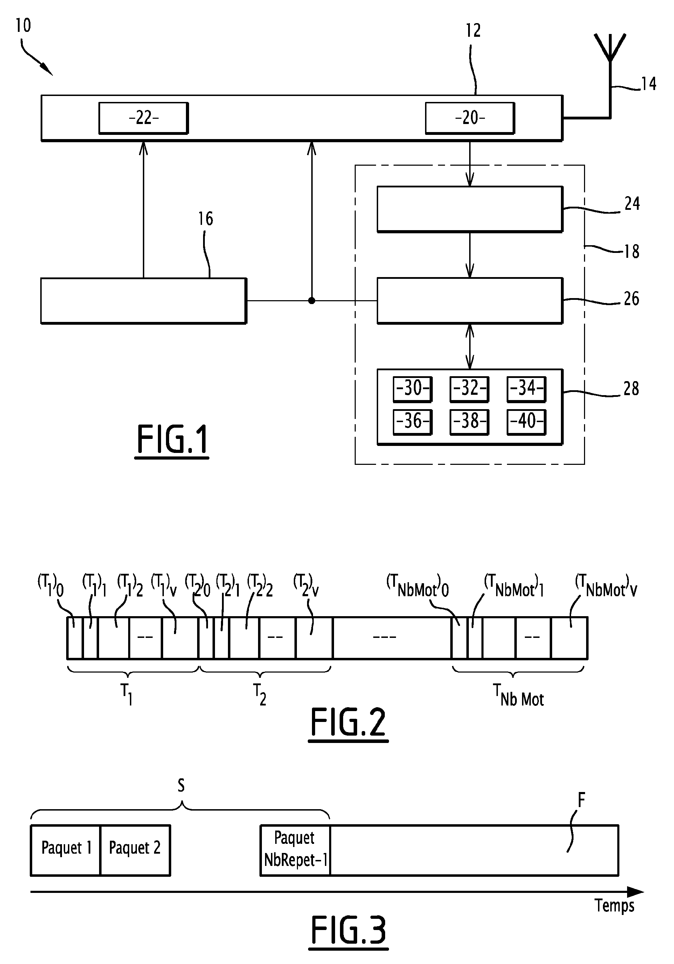

Un réseau de transmission selon l'invention comporte une pluralité de stations radioélectriques 10, et est par exemple propre à fonctionner en évasion de fréquences. Une station radioélectrique 10 est illustrée sur la figure 1.

Le réseau de transmission est propre à transmettre, depuis une station radioélectrique 10 à destination d'une autre station radioélectrique 10, une information, visible sur la figure 2, comportant NbMot mots de données $T_1$, $T_2$, ..., $T_{NbMot}$, NbMot étant un nombre entier strictement supérieur à 1. La station radioélectrique 10 destinée à émettre l'information est appelée par la suite station émettrice, et la ou chaque station radioélectrique 10 destinée à recevoir l'information est appelée par la suite station réceptrice.

L'ensemble des fréquences utilisables par le réseau de transmission comporte un plan de fréquences, également appelé plan EVF, pour le fonctionnement en évasion de fréquences. Le plan EVF appartient, par exemple, au domaine des hautes fréquences, également appelé domaine HF, compris entre 1,5 MHz et 30 MHz. Le plan EVF est, par exemple, un plan de fréquences prédéterminé.

Le nombre de stations radioélectriques 10 est, par exemple, supérieur ou égal à trois, chaque station 10 étant propre à émettre des données en conférence aux autres stations 10 du réseau.

Chaque station 10 comprend, de façon connue en soi et comme représenté sur la figure 1, une chaîne d'émission-réception 12, une antenne 14, un synthétiseur de fréquence 16 et une unité de traitement 18.

La chaîne d'émission-réception 12 est reliée à l'antenne d'émission-réception 14, au synthétiseur de fréquence 16 et à l'unité de traitement 18, le synthétiseur de fréquence 16 et l'unité de traitement 18 étant également reliés entre eux.

La chaîne d'émission-réception 12 comporte un dispositif 20 de réception des signaux radioélectriques issus de l'antenne 14 et un dispositif 22 d'émission de signaux radioélectriques vers l'antenne 14. La chaîne d'émission-réception 12 est propre à être pilotée de façon connue par le synthétiseur de fréquence 16.

L'unité de traitement 18 comporte un convertisseur analogique numérique 24 connecté en sortie du dispositif de réception 20 de la chaîne d'émission-réception, un microprocesseur 26 connecté en sortie du convertisseur analogique numérique 24, et une mémoire 28 reliée au microprocesseur 26.

Le convertisseur analogique numérique 24 est propre à transformer le niveau de tension ou de courant fourni par le dispositif de réception 20 en échantillons numériques de signal transmis au microprocesseur 26.

Le microprocesseur 26 est relié au synthétiseur de fréquence 16 et à la chaîne d'émission-réception 12 pour l'émission de signaux radioélectriques à destination d'autres émetteurs-récepteurs 10 du réseau de transmission.

Dans le mode de réalisation décrit, chaque station 10 est configurée pour fonctionner alternativement en tant que station émettrice et en tant que station réceptrice.

Pour le fonctionnement de la station 10 en tant que station émettrice, la mémoire 28 est apte à stocker un premier logiciel 30 de détermination d'au moins un polynôme $P_w(X)$, $0 \leq w \leq v$, de degré NbMot-1, chacun des NbMot coefficients du polynôme correspondant à un mot respectif, chaque polynôme ayant une indéterminée X. La mémoire 28 est apte à stocker un premier logiciel 32 de calcul de NbRepet valeurs polynomiales $P_w((\alpha_w)^{NbRepet-1-i})$, $0 \leq w \leq v$, $0 \leq i \leq NbRepet-1$, pour le ou chaque polynôme $P_w(X)$, NbRepet étant un nombre entier strictement supérieur à 1, chaque valeur polynomiale $P_w((\alpha_w)^{NbRepet-1-i})$ étant calculée pour une valeur prédéterminée respective $(\alpha_w)^{NbRepet-1-i}$ de l'indéterminée X. La mémoire 28 est également apte à stocker un logiciel 34 d'émission, à destination d'au moins une autre station radioélectrique 10, des valeurs polynomiales calculées $P_w((\alpha_w)^{NbRepet-1-i})$.

Pour le fonctionnement de la station 10 en tant que station réceptrice, la mémoire 28 est apte à stocker un logiciel 36 de réception desdites valeurs polynomiales émises $P_w((\alpha_w)^{NbRepet-1-i})$ par une station émettrice 10, un deuxième logiciel 38 de détermination des NbMot mots $T_1$, $T_2$, ..., $T_{NbMot}$ à partir d'une interpolation de Lagrange des valeurs polynomiales reçues $P_w((\alpha_w)^{NbRepet-1-m})$.

Le procédé de transmission est, par exemple, mis en oeuvre lors d'une phase de synchronisation entre plusieurs stations radioélectriques 10. La phase de synchronisation correspond à la transmission d'une salve de paquets radio élémentaires, i.e. d'un nombre fixe de paquets radio élémentaires. La procédure de synchronisation est utilisée pour transmettre principalement deux types d'information entre la station émettrice et la station réceptrice, à savoir une donnée technique nécessaire au décodage de l'information et une information de synchronisation temporelle t_final, la donnée technique comportant par exemple l'adresse de l'émetteur, l'adresse du destinataire, le type de services de transmission de données, des données de sécurité comme un motif d'intégrité et une authentification cryptographique. L'information de synchronisation temporelle permet à la station réceptrice de se positionner dans la salve de paquets reçus et de déduire sans ambiguïté l'instant de début de la phase de transmission de l'information qui suit la phase de synchronisation.

En complément, la mémoire 28 est apte à stocker un deuxième logiciel 40 de calcul de l'information de synchronisation temporelle t_final avec la station émettrice 10, à partir des valeurs polynomiales reçues $P_w((\alpha_w)^{NbRepet-1-m})$ et d'écarts temporels de réception entre différents paquets de données reçus $R_m$, avec m nombre entier tel que $0 \leq m \leq NbMot-1$, NbRepet paquets de données *Paquet(i)*, $0 \leq i \leq NbRepet-1$, étant propres à être émis successivement par la station émettrice 10.

En variante, chaque station 10 est configurée pour fonctionner uniquement en tant que station émettrice ou bien en tant que station réceptrice. La mémoire 28 de chaque station émettrice 10 comporte alors seulement le premier logiciel de détermination 30, le premier logiciel de calcul 32 et le logiciel d'émission 34. La mémoire 28 de chaque station réceptrice 10 comporte alors seulement le logiciel de réception 36 et le deuxième logiciel de détermination 38. En complément, la mémoire 28 de chaque station réceptrice 10 comporte le deuxième logiciel de calcul 40.

En variante, les premiers moyens de détermination 30, les premiers moyens de calcul 32, les moyens d'émission 34, les moyens de réception 36, les deuxièmes moyens de détermination 38 et les deuxièmes moyens de calcul 40 sont réalisés sous forme de composants logiques programmables, ou encore sous forme de circuits intégrés dédiés.

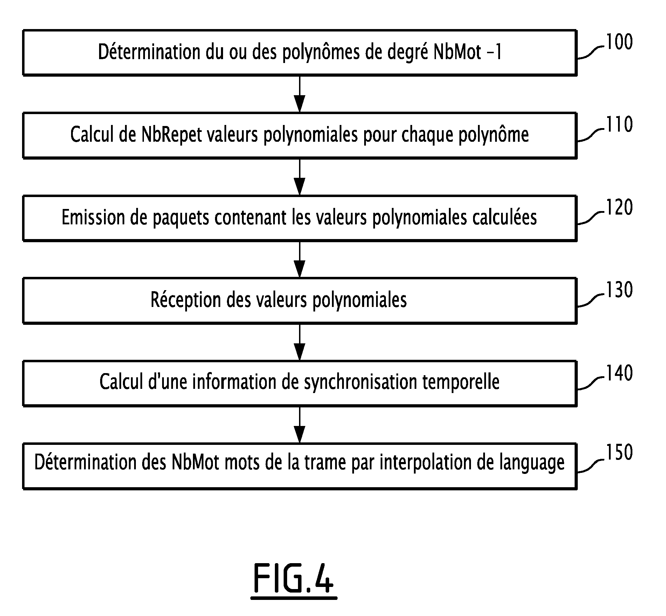

Le procédé de transmission de l'information va être à présent décrit en regard des figures 2 à 4, la figure 4 illustrant en particulier un organigramme du procédé de transmission.

Lors de l'étape 100, la station émettrice 10 détermine, à l'aide du premier logiciel de détermination 30, au moins un polynôme $P_w(X)$, $0 \leq w \leq v$, de degré NbMot-1, chacun des NbMot coefficients du polynôme $P_w(X)$ correspondant à un mot $T_1$, ..., $T_{NbMot}$ respectif. Le ou chaque polynôme $P_w(X)$ comporte une indéterminée X, l'indéterminée X étant de préférence unique pour le ou chaque polynôme $P_w(X)$. w et v sont des nombres entiers.

Chaque mot $T_1$, ..., $T_{NbMot}$ comporte au moins un motif $(T_j)_w$, $0 \leq w \leq v$, j étant un nombre entier tel que $1 \leq j \leq NbMot$, et le ou chaque motif $(T_j)_w$ représente un élément d'un corps mathématique, tel que le corps de Galois.

Les NbMot mots de données $T_1$, $T_2$, ..., $T_{NbMot}$ présentent, par exemple, une même taille égale à N bits, N étant un nombre entier strictement supérieur à 1.

Dans l'exemple de réalisation décrit, un mot, tel que le premier mot $T_1$, parmi les NbMot mots de données $T_1$, $T_2$, ..., $T_{NbMot}$ comporte k bit(s) ayant une valeur constante prédéterminée CST, k étant un nombre entier avec $1 \leq k \leq N$, k étant de préférence strictement supérieur à 1 et également tel que $NbRepet-1 < 2^k$.

Les k bits égaux à CST représentent, par exemple, un élément du corps de Galois $GF(2^k)$. Par souci d'homogénéité avec la suite de la description, k est noté a(0) de sorte que $GF(2^k)$ est égal à $GF(2^{a(0)})$. $\alpha_0$ est un élément primitif du corps de Galois $GF(2^{a(0)})$. Les N-k autres bits du premier mot $T_1$ représentent la succession de v éléments appartenant respectivement à v corps de la forme $GF(2^{a(1)})$, ... , $GF(2^{a(v)})$, v étant un nombre entier supérieur ou égal à 1, tels que pour tout w, $1 \leq w \leq v$, $a(w) \geq k$,

$$\sum_{w=1}^{v} a(w) = N - k \qquad (1)$$

Dans le cas particulier où v est égal à 1, les N-k bits représentent un élément du corps $GF(2^{N-k})$.

$\alpha_1$, ..., $\alpha_v$ représentent les v éléments primitifs respectifs des v corps de Galois successifs $GF(2^{(1)})$, ... , $GF(2^{a(v)})$.

Dans l'exemple de réalisation décrit, chaque mot $T_j$, $1 \leq j \leq NbMot$, est découpé en v+1 motifs $(T_j)_w$, $0 \leq w \leq v$, v étant supérieur ou égal à 1, chaque motif $(T_j)_w$ étant un élément d'un corps respectif $GF(2^{a(j)})$. Chaque mot $T_j$ est alors représenté de la manière suivante :

$$T_j = (T_j)_0 \;\|\; (T_j)_1 \;\|\; (T_j)_2 \;\|\; \dots \;\|\; (T_j)_v \tag{2}$$

Dans le cas particulier où les k premiers bits du premier mot $T_1$ sont égaux à CST, on a également : $(T_1)_0 = $ CST.

Le premier logiciel de détermination 30 détermine alors plusieurs polynômes $P_w(X)$, $0 \leq w \leq v$ et $v \geq 1$, à l'aide de l'équation suivante :

$$P_w(X) = (T_{NbMot})_w + \sum_{j=1}^{NbMot-1} (T_j)_w \times X^j \tag{3}$$

avec NbMot > 1, $0 \leq w \leq v$ et $v \geq 1$ et X désignant l'indéterminée.

Dans l'exemple de réalisation décrit, les coefficients de chaque polynôme $P_w(X)$ appartiennent au corps de Galois $GF(2^{a(w)})$. Chacun des NbMot coefficients $(T_j)_w$ du polynôme $P_w(X)$ correspond alors à un motif respectif.

Plus précisément, le premier logiciel de détermination 30 détermine alors les $v+1$ polynômes suivants :

$$
\begin{aligned}
P_0(X) &= (T_{NbMot})_0 + CST \times X + (T_2)_0 \times X^2 + \dots + (T_{NbMot-1})_0 \times X^{NbMot-1} \\
P_1(X) &= (T_{NbMot})_1 + (T_1)_1 \times X + (T_2)_1 \times X^2 + \dots + (T_{NbMot-1})_1 \times X^{NbMot-1} \\
&\dots \\
P_v(X) &= (T_{NbMot})_v + (T_1)_v \times X + (T_2)_v \times X^2 + \dots + (T_{NbMot-1})_v \times X^{NbMot-1}
\end{aligned}
\tag{4}
$$

Lors de l'étape 110, la station émettrice 10 détermine, à l'aide du premier logiciel de calcul 32, NbRepet valeurs polynomiales $P_w((\alpha_w)^{NbRepet-1-i})$, $0 \leq w \leq v$, $0 \leq i \leq NbRepet-1$, pour le ou chaque polynôme $P_w(X)$, i étant un nombre entier, NbRepet étant un nombre entier strictement supérieur à 1. Chaque valeur polynomiale $P_w(\alpha_w)^{NbRepet-1-i})$ est calculée pour une valeur prédéterminée respective de l'indéterminée X.

Chaque valeur prédéterminée respective pour laquelle une valeur polynomiale $P_w((\alpha_w)^{NbRepet-1-i})$ est calculée, est, par exemple, l'élément primitif $(\alpha_w)^{NbRepet-1-i}$, $0 \leq w \leq v$, $0 \leq i \leq NbRepet-1$, d'un corps de Galois respectif $GF(2^{a(w)})$.

Le calcul de la valeur polynomiale $P_0((\alpha_0)^{NbRepet-1-i})$ correspond à des calculs dans le corps de Galois $GF(2^{a(0)})$, c'est-à-dire dans $GF(2^k)$. Le calcul de la valeur polynomiale $P_1((\alpha_1)^{NbRepet-1-i})$ correspond à des calculs dans le corps de Galois $GF(2^{a(1)})$, et ainsi de suite.

La station émettrice 10 émet ensuite, lors de l'étape 120, à l'aide du logiciel d'émission 34, les valeurs polynomiales calculées $P_w((\alpha_w)^{NbRepet-1-i})$ à destination d'au moins une autre station réceptrice 10. Les valeurs polynomiales calculées $P_w((\alpha_w)^{NbRepet-1-i})$ sont, par exemple, transmises sous la forme de NbRepet paquets de données *Paquet*(i), $0 \leq i \leq NbRepet-1$, émis successivement.

Les paquets *Paquet*(i) sont, par exemple, définis de la manière suivante :

$$Paquet(i) = P_0((\alpha_0)^{NbRepet-1-i}) \,\|\, \dots \,\|\, P_w((\alpha_w)^{NbRepet-1-i}) \,\|\, \dots \,\|\, P_v((\alpha_v)^{NbRepet-1-i}) \tag{5}$$

avec NbRepet > 1, $0 \leq i \leq NbRepet-1$, $0 \leq w \leq v$

$(\alpha_w)^{NbRepet-1-i}$ désignant la valeur prédéterminée respective de l'indéterminée pour le calcul de la valeur polynomiale correspondante, et

$\|$ symbolisant une concaténation de données.

La ou chaque station réceptrice 10 reçoit alors, lors de l'étape 130, des paquets $R_m$ contenant lesdites valeurs polynomiales $P_w((\alpha_w)^{NbRepet-1-m})$. On suppose que chaque station réceptrice 10 reçoit NbMot paquets $R_0$, $R_1$, ..., $R_{NbMot-1}$, avec la convention $R_m = Paquet(t(m))$, t(m) désignant l'instant de réception du paquet $R_m$, avec $0 \leq m \leq NbMot-1$.

La ou chaque station réceptrice 10 connaît précisément les écarts de temps de réception entre les différents paquets $R_0$, $R_1$, ..., $R_{NbMot-1}$. Ces écarts de temps sont notés d(n), $1 \leq n \leq NbMot-1$ et vérifient les équations suivantes :

$$t(1) = t(0) + d(1),$$
$$t(2) = t(1) + d(2), \ldots, \tag{6}$$
$$t(NbMot\text{-}1) = t(NbMot - 2) + d(NbMot\text{-}1)$$

Autrement dit, les différents instants de réception t(m) sont définis de la manière suivante :

$$t(m) = t(NbMot - 1) - \sum_{n=m+1}^{NbMot-1} d(n) \tag{7}$$

soit $t(0) = t(NbMot\text{-}1) - d(1) - d(2) - \ldots - d(NbMot\text{-}1),$
$$t(1) = t(NbMot\text{-}1) - d(2) - \ldots - d(NbMot\text{-}1), \ldots, \tag{8}$$
$$t(NbMot\text{-}2) = t(NbMot - 1) - d(NbMot\text{-}1), \text{ et}$$
$$t(NbMot - 1)$$

Chaque paquet $R_m$ reçu s'écrit alors sous la forme suivante :

$$R_0 = Paquet(t(0)) = P_0((\alpha_0)^{NbRepet-1-t(0)}) \,||\, \ldots \,||\, P_v((\alpha_v)^{NbRepet-1-t(0)})$$
$$R_1 = Paquet(t(1)) = P_0((\alpha_0)^{NbRepet-1-t(1)}) \,||\, \ldots \,||\, P_v((\alpha_v)^{NbRepet-1-t(1)}) \tag{9}$$
$$\ldots$$
$$R_{NbMot-1} = Paquet(t(NbMot-1)) = P_0((\alpha_0)^{NbRepet-1-t(NbMot-1)}) \,||\, \ldots \,||\, P_v((\alpha_v)^{NbRepet-1-t(NbMot-1)})$$

ce qui se réécrit sous la forme :

$$R_0 = P_0((\alpha_0)^{NbRepet-1-t(NbMot\text{-}1)+d(1)+\ldots+d(NbMot\text{-}1)}) \,||..||\, P_v((\alpha_v)^{NbRepet-1-t(NbMot\text{-}1)+d(1)+\ldots+d(NbMot\text{-}1)})$$
$$R_1 = P_0((\alpha_0)^{NbRepet-1-t(NbMot\text{-}1)+d(2)+\ldots+d(NbMot\text{-}1)}) \,||..||\, P_v((\alpha_v)^{NbRepet-1-t(NbMot\text{-}1)+d(2)+\ldots+d(NbMot\text{-}1)})$$
$$\ldots$$
$$R_{NbMot-2} = P_0((\alpha_0)^{NbRepet-1-t(NbMot\text{-}1)+d(NbMot\text{-}1)}) \,||\, \ldots \,||\, P_v((\alpha_v)^{NbRepet-1-t(NbMot\text{-}1)+d(NbMot\text{-}1)})$$
$$R_{NbMot-1} = P_0((\alpha_0)^{NbRepet-1-t(NbMot\text{-}1)}) \,||\, \ldots \,||\, P_v((\alpha_v)^{NbRepet-1-t(NbMot\text{-}1)}) \tag{10}$$

L'information de synchronisation temporelle t_final est définie par l'équation :

$$t\_final = NbRepet - 1 - t(NbMot - 1) \tag{11}$$

Le deuxième logiciel de détermination 38 détermine alors, par interpolation de Lagrange comme connu en soi, v+1 polynômes $Q_w(X)$ de degré NbMot-1, avec $0 \leq w \leq v$ et $v \geq 1$, à l'aide de l'équation suivante :

$$Q_w(X) = P_w((\alpha_w)^{t-final} \times X) = (T_{NbMot})_w + \sum_{j=1}^{NbMot-1} (\alpha_w)^{t-final \times j} \times (T_j)_w \times X^j. \tag{12}$$

D'après ce qui précède, les NbMot paquets $R_0, R_1, \ldots, R_{NbMot-1}$ s'écrivent alors :

$$R_0 = Q_0((\alpha_0)^{d(1)+...+d(NbMot\text{-}1)}) \ || \ ... \ || \ Q_v((\alpha_v)^{d(1)+...+d(NbMot\text{-}1)})$$

$$R_1 = Q_0((\alpha_0)^{d(2)+...+d(NbMot\text{-}1)}) \ || \ ... \ || \ Q_v((\alpha_v)^{d(2)+...+d(NbMot\text{-}1)})$$

$$...$$

$$R_{NbMot\text{-}2} = Q_0((\alpha_0)^{d(NbMot\text{-}1)}) \ || \ ... \ || \ Q_v((\alpha_v)^{d(NbMot\text{-}1)})$$

$$R_{NbMot\text{-}1} = Q_0(1) \qquad\qquad || \ ... \ || \ Q_v(1)$$

Dans l'exemple de réalisation décrit, les coefficients de chaque polynôme $Q_w(X)$ appartiennent au corps de Galois $GF(2^{a(w)})$.

Plus précisément, le deuxième logiciel de détermination 38 détermine alors les $v+1$ polynômes suivants :

$$(13)$$

$$Q_0(X) = (T_{NbMot})_0 + CST \times (\alpha_0)^{t-final} \times X + (T_2)_0 \times (\alpha_0)^{t-final\times2} \times X^2 + ... + (T_{NbMot-1})_0 \times (\alpha_0)^{t-final\times(NbMot-1)} \times X^{NbMot-1}$$

$$Q_1(X) = (T_{NbMot})_1 + (T_1)_1 \times (\alpha_1)^{t-final} \times X + (T_2)_1 \times (\alpha_1)^{t-final\times2} \times X^2 + ... + (T_{NbMot-1})_1 \times (\alpha_1)^{t-final\times(NbMot-1)} \times X^{NbMot-1}$$

$$...$$

$$Q_v(X) = (T_{NbMot})_v + (T_1)_v \times (\alpha_v)^{t-final} \times X + (T_2)_v \times (\alpha_v)^{t-final\times2} \times X^2 + ... + (T_{NbMot-1})_v \times (\alpha_v)^{t-final\times(NbMot-1)} \times X^{NbMot-1}$$

Chaque coefficient du polynôme $Q_w(X)$ pour le terme $X^j$ de degré j est noté $Coeff(Q_w(X), j)$, et chaque polynôme $Q_w(X)$ s'écrit alors :

$$Q_w(X) = (T_{NbMot})_w + \sum_{j=1}^{NbMot-1} Coeff(Q_w(X), j) \times X^j \qquad (14)$$

Le deuxième logiciel de calcul 40 calcule alors l'information de synchronisation temporelle t_final à l'aide du coefficient $Coeff(Q_0(X), 1)$, celui-ci vérifiant d'après les équations (12) et (14) l'équation suivante :

$$Coeff(Q_0(X),1) = (\alpha_0)^{t-final} \times (T_1)_0 = (\alpha_0)^{t-final} \times CST \qquad (15)$$

Par conséquent, la quantité $(\alpha_0)^{t\_final}$ se retrouve en calculant la quantité $Coeff(Q_0(X),1)/CST$ dans le corps de Galois $GF(2^k)$. La valeur k étant relativement petite, le deuxième logiciel de calcul 40 est alors en mesure de retrouver l'information de synchronisation temporelle t_final à partir de la valeur $(\alpha_0)^{t\_final}$, par exemple à l'aide d'une table de concordance entre les éléments $(\alpha_0)^m$ et m, ou encore via une recherche exhaustive sur les quelques valeurs possibles de l'information de synchronisation temporelle t_final.

La station réceptrice 10 sait alors, à l'issue de l'émission des NbRepet-1 paquets de données *Paquet(m)* correspondant par exemple à une phase de synchronisation S, se positionner exactement sur une phase de communication F successive, comme représenté sur la figure 3. La phase de communication F permet, par exemple, la transmission d'un flux d'information utile à l'issue de la phase de synchronisation S.

Le deuxième logiciel de détermination 38 détermine enfin, lors de l'étape 150, la valeur de chacun des NbMot mots $T_1$, $T_2$, ..., $T_{NbMot}$ à partir de l'interpolation de Lagrange des valeurs polynomiales reçues $P_w((\alpha_w)^{NbRepet-1-i})$.

A partir des coefficients de chacun des $v+1$ polynômes $Q_w(X)$, $0 \leq w \leq v$, le deuxième logiciel de détermination 38 obtient le mot $T_{NbMot}$ valant :

$$T_{NbMot} = (T_{NbMot})_0 \ || \ (T_{NbMot})_1 \ || \ (T_{NbMot})_2 \ || \ ... \ || \ (T_{NbMot})_v \qquad (16)$$

Pour les autres mots $T_j$, $0 \leq j \leq NbMot - 1$, le deuxième logiciel de détermination 38, connaissant la valeur $(\alpha_0)^{t\_final}$, détermine chaque motif $(T_j)_w$ à partir de chaque polynôme $Q_w(X)$ à l'aide de l'équation suivante :

$$(T_j)_w = \frac{Coeff(Q_w(X), j)}{(\alpha_w)^{t\_final \times j}} \tag{17}$$

la valeur de $(\alpha_w)^{t\_final}$ étant calculée à partir de la valeur connue de l'élément primitif $\alpha_w$ et de la valeur de l'information de synchronisation temporelle t_final calculée précédemment.

Autrement dit, chaque mot $T_j$ est, d'après les équations (2) et (17) déterminé de la manière suivante :

$$T_j = \frac{Coeff(Q_0(X), j)}{(\alpha_0)^{t\_final \times j}} \left\| \frac{Coeff(Q_1(X), j)}{(\alpha_1)^{t\_final \times j}} \right\| \cdots \left\| \frac{Coeff(Q_v(X), j)}{(\alpha_v)^{t\_final \times j}} \right. \tag{18}$$

A titre d'exemple, le procédé de transmission est décrit ci-après dans le cas particulier où NbMot est égal à 2 et le nombre entier v est égal à 1.

L'information devant être transmise est de taille 2xN bits. En supposant que la valeur constante CST se trouve sur les k premiers bits du premier mot $T_1$, les premier et deuxième mots à transmettre $T_1$, $T_2$ s'écrivent alors :

$$T_1 = CST \parallel (T_1)_1 \tag{19}$$

où CST est un élément du corps de Galois $GF(2^k)$ et $(T_1)_1$ est un élément du corps de Galois $GF(2^{N-k})$, et

$$T_2 = (T_2)_0 \parallel (T_2)_1 \tag{20}$$

où $(T_2)_0$ est un élément du corps de Galois $GF(2^k)$ et $(T_2)_1$ est un élément du corps de Galois $GF(2^{N-k})$.

Le premier logiciel de détermination 30 détermine alors les deux polynômes $P_0(X)$ et $P_1(X)$ de degré 1 suivants :

$$\begin{aligned} P_0(X) &= (T_2)_0 + CST \times X \\ P_1(X) &= (T_2)_1 + (T_1)_1 \times X \end{aligned} \tag{21}$$

$P_0(X)$ étant défini dans le corps de Galois $GF(2^k)$ et $P_1(X)$ étant défini dans le corps de Galois $GF(2^{N-k})$.

Les NbRepet paquets *Paquet(i)* émis sont alors les suivants :

$$\begin{aligned} Paquet(0) &= P_0((\alpha_0)^{NbRepet-1}) \big\| P_1((\alpha_1)^{NbRepet-1}) \\ Paquet(1) &= P_0((\alpha_0)^{NbRepet-2}) \big\| P_1((\alpha_1)^{NbRepet-2}) \\ &\quad \cdots \\ Paquet(NbRepet-2) &= P_0(\alpha_0) \big\| P_1(\alpha_1) \\ Paquet(NbRepet-1) &= P_0(1) \big\| P_1(1) \end{aligned} \tag{22}$$

En réception, on suppose alors que la station réceptrice 10 reçoit NbMot paquets, c'est-à-dire 2 paquets $R_0$ et $R_1$, à des instants respectifs t0 et t1, avec t1 égal à t0+d, où d représente l'écart temporel entre les deux paquets reçus, cet écart temporel d étant connu de la station réceptrice 10.

Le premier paquet reçu $R_0$ vérifie :

$$R_0 = Paquet(t0) = P_0((\alpha_0)^{NbRepet-1-t0}) \big\| P_1((\alpha_1)^{NbRepet-1-t0}) \tag{23}$$

ce qui s'écrit sous la forme

$$R_0 = P_0((\alpha_0)^{Nb\,\mathrm{Re}\,pet-1-t1} \times (\alpha_0)^d) \big\| P_1((\alpha_1)^{Nb\,\mathrm{Re}\,pet-1-t1} \times (\alpha_1)^d) = Q_0((\alpha_0)^d) \big\| Q_1((\alpha_1)^d) \quad (24)$$

étant donné que

$$t1 = t0+d \qquad\qquad (25)$$

Le deuxième paquet reçu $R_1$ vérifie :

$$R_1 = Paquet(t1) = P_0((\alpha_0)^{Nb\,\mathrm{Re}\,pet-1-t1}) \big\| P_1((\alpha_1)^{Nb\,\mathrm{Re}\,pet-1-t1}) \qquad (26)$$

ce qui s'écrit sous la forme

$$R_1 = P_0((\alpha_0)^{Nb\,\mathrm{Re}\,pet-1-t1} \times (\alpha_0)^0) \big\| P_1((\alpha_1)^{Nb\,\mathrm{Re}\,pet-1-t1} \times (\alpha_1)^0) = Q_0(1) \big\| Q_1(1) \quad (27)$$

Par interpolation de Lagrange, la station réceptrice 10 reconstruit les polynômes :

$$Q_0(X) = Coeff(Q_0(X),0) + Coeff(Q_0(X),1) \times X = P_0((\alpha_0)^{Nb\,\mathrm{Re}\,pet-1-t1} \times X) \quad (28)$$

$$Q_1(X) = Coeff(Q_1(X),0) + Coeff(Q_1(X),1) \times X = P_1((\alpha_1)^{Nb\,\mathrm{Re}\,pet-1-t1} \times X) \quad (29)$$

Par identification de polynôme, la station réceptrice 10 en déduit que

$$T_2 = Coeff(Q_0(X),0) \big\| Coeff(Q_1(X),0) \qquad (30)$$

et que

$$Coeff(Q_0(X),1) = (\alpha_0)^{Nb\,\mathrm{Re}\,pet-1-t1} \times (T_1)_0 = (\alpha_0)^{Nb\,\mathrm{Re}\,pet-1-t1} \times CST \qquad (31)$$

puis que

$$Coeff(Q_1(X),1) = (\alpha_1)^{Nb\,\mathrm{Re}\,pet-1-t1} \times (T_1)_1 \qquad (32)$$

La station réceptrice 10 déduit alors la valeur de NbRepet-1-t1 de l'équation (31), puis la valeur du motif $(T_1)_1$ de l'équation (32) suivant :

$$(T_1)_1 = \frac{Coeff(Q_1(X),1)}{(\alpha_1)^{Nb\,\mathrm{Re}\,pet-1-t1}} \qquad (33)$$

Le procédé de transmission et le réseau de transmission selon l'invention permettent alors de transmettre l'information comportant les mots de données $T_1$, ..., $T_{NbMot}$, entre une station émettrice 10 et une ou plusieurs stations réceptrices 10 via l'émission de seulement NbRepet paquets de données *Paquet(i)*, tout en garantissant la qualité de service souhaitée.

A titre de comparaison, pour une même qualité de service et pour une même taille des paquets émis, le procédé de transmission selon l'invention nécessite un nombre de paquets émis environ 2,5 fois inférieur au nombre de paquets émis nécessaire avec le procédé de transmission de l'état de la technique.

En outre, le procédé de transmission selon l'invention permet également de calculer de manière très simple l'information de synchronisation temporelle t_final.

On conçoit ainsi que le procédé et le réseau de transmission selon l'invention permettent de réduire la quantité de données transmises par la station émettrice à destination de la ou des stations réceptrices, pour transporter ladite information comportant les mots de données T$_1$, ..., T$_{NbMot}$, tout en offrant la même qualité de service que le procédé de transmission de l'état de la technique.

Le réseau de transmission selon l'invention est ainsi particulièrement plus rapide pour transmettre l'information.

**Revendications**

1. Procédé de transmission d'une information entre une pluralité de stations radioélectriques (10), chaque station (10) comportant un émetteur (22) et un récepteur (20), l'information comportant NbMot mots de données (T$_1$, T$_2$, ..., T$_{NbMot}$), NbMot étant un nombre entier strictement supérieur à 1,
le procédé comprenant les étapes suivantes :

   - la détermination (100) d'au moins un polynôme (P$_w$(X), $0 \leq w \leq v$) de degré NbMot-1, chacun des NbMot coefficients du polynôme (P$_w$(X)) correspondant à un mot respectif (T$_1$, T$_2$, ..., T$_{NbMot}$), chaque polynôme (P$_w$(X)) ayant une indéterminée (X),
   - le calcul (110) de NbRepet valeurs polynomiales (P$_w$(($\alpha_w$)$^{NbRepet-1-i}$), $0 \leq w \leq v$, $0 \leq i \leq$ NbRepet-1) pour le ou chaque polynôme (P$_w$(X), $0 \leq w \leq v$), NbRepet étant un nombre entier strictement supérieur à 1, chaque valeur polynomiale (P$_w$(($\alpha_w$)$^{NbRepet-1-i}$)) étant calculée pour une valeur prédéterminée respective (($\alpha_w$)$^{NbRepet-1-i}$, $0 \leq w \leq v$, $0 \leq i \leq$ NbRepet-1) de l'indéterminée (X),
   - l'émission (120), par une station radioélectrique (10) à destination d'au moins une autre station radioélectrique (10), des valeurs polynomiales calculées (P$_w$(($\alpha_w$)$^{NbRepe-1-i}$)),
   - la réception (130) de valeurs polynomiales (P$_w$(($\alpha_w$)$^{NbRepet-1-m}$)) par la ou chaque autre station radioélectrique (10), et
   - la détermination (150), par la ou chaque autre station radioélectrique (10), des NbMot mots (T$_1$, T$_2$, ..., T$_{NbMot}$) à partir d'une interpolation de Lagrange des valeurs polynomiales reçues (P$_w$(($\alpha_w$)$^{NbRepet-1-m}$)),

   le procédé étant **caractérisé en ce que** NbRepet paquets de données *(Paquet(i)*, $0 \leq i \leq$ NbRepet-1) sont émis successivement lors de l'étape d'émission (120), et
   **en ce qu'**il comprend en outre une étape de calcul (140), par la ou chaque station (10) recevant lesdits paquets, d'une information de synchronisation temporelle (t_final) avec la station radioélectrique (10) émettant lesdits paquets, à partir des valeurs polynomiales reçues (P$_w$(($\alpha_w$)$^{NbRepet-1-m}$)) et d'écarts temporels de réception entre les différents paquets reçus (R$_m$, $0 \leq m \leq$ NbMot-1).

2. Procédé selon la revendication 1, dans lequel chaque mot (T$_j$, $1 \leq j \leq$ NbMot) est découpé en une pluralité de motifs ((T$_j$)$_w$, $0 \leq w \leq v$ et $v \geq 1$, $1 \leq j \leq$ NbMot), et plusieurs polynômes (P$_w$(X), $0 \leq w \leq v$ et $v \geq 1$) sont déterminés à l'aide de l'équation suivante :

$$P_w(X) = (T_{NbMot})_w + \sum_{j=1}^{NbMot-1}(T_j)_w \times X^j$$

avec NbMot > 1, $0 \leq w \leq v$ et $v \geq 1$ et X désignant l'indéterminée.

3. Procédé selon la revendication 1 ou 2, dans lequel les paquets (*Paquet*(i)) sont définis de la manière suivante :

$$Paquet(i) = P_0((\alpha_0)^{Nb\,\mathrm{Re}\,pet-1-i})\|..\|P_w((\alpha_w)^{Nb\,\mathrm{Re}\,pet-1-i})\|..\|P_v((\alpha_v)^{Nb\,\mathrm{Re}\,pet-1-i})$$

avec NbRepet > 1, $0 \leq i \leq$ NbRepet-1, $0 \leq w \leq v$
($\alpha_w$)$^{NbRepet-1-i}$ désignant la valeur prédéterminée respective de l'indéterminée (X) pour le calcul de la valeur polynômiale (P$_w$(($\alpha_w$)$^{NbRepet-1-i}$)) correspondante, et
‖ symbolisant une concaténation de données.

4. Procédé selon l'une quelconque des revendications précédentes, dans lequel les NbMot mots de données (T$_1$, T$_2$, ..., T$_{NbMot}$) présentent une même taille égale à N bits, N étant un nombre entier strictement supérieur à 1.

**5.** Procédé selon la revendication 4, dans lequel un mot ($T_1$) parmi les NbMot mots de données ($T_1$, $T_2$, ..., TNbMot) comporte k bit(s) ayant une valeur constante prédéterminée (CST), k étant un nombre entier avec $1 \leq k \leq N$.

**6.** Procédé selon l'une quelconque des revendications précédentes, dans lequel chaque mot ($T_j$, $1 \leq j \leq$ NbMot) comporte au moins un motif (($T_j)_w$, $0 \leq w \leq v$, $1 \leq j \leq$ NbMot), et le ou chaque motif (($T_j)_w$) représente un élément d'un corps mathématique, tel qu'un corps de Galois (GF($2^{a(w)}$).

**7.** Procédé selon la revendication 6, dans lequel chaque valeur prédéterminée respective (($\alpha_w)^{NbRepet-1-i}$, $0 \leq w \leq v$, $0 \leq i \leq$ NbRepet-1), pour laquelle une valeur polynomiale ($P_w((\alpha_w)^{NbRepet-1-i})$) est calculée, est un élément primitif du corps de Galois (GF($2^{a(w)}$)).

**8.** Réseau de transmission d'une information, le réseau comprenant une pluralité de stations radioélectriques (10), chaque station (10) comportant un émetteur (22) et un récepteur (20), l'information comportant NbMot mots de données ($T_1$, $T_2$, ..., $T_{NbMot}$), NbMot étant un nombre entier strictement supérieur à 1, chaque station (10) destinée à émettre l'information comportant en outre :

- des premiers moyens (30) de détermination d'au moins un polynôme ($P_w(X)$, $0 \leq w \leq v$) de degré NbMot-1, chacun des NbMot coefficients du polynôme ($P_w(X)$) correspondant à un mot respectif ($T_1$, $T_2$, ..., TNbMot), chaque polynôme ($P_w(X)$) ayant une indéterminée (X),
- des premiers moyens (32) de calcul de NbRepet valeurs polynomiales ($P_w((\alpha_w)^{NbRepet-1-i}$), $0 \leq w \leq v$, $0 \leq i \leq$ NbRepet-1) pour le ou chaque polynôme ($P_w(X)$, $0 \leq w \leq v$), NbRepet étant un nombre entier strictement supérieur à 1, chaque valeur polynomiale ($P_w((\alpha_w)^{NbRepet-1-i})$) étant calculée pour une valeur prédéterminée respective (($\alpha_w)^{NbRepet-1-i}$, $0 \leq w \leq v$, $0 \leq i \leq$ NbRepet-1) de l'indéterminée (X), et
- des moyens (34) d'émission, à destination d'au moins une autre station radioélectrique (10), des valeurs polynomiales calculées ($P_w((\alpha_w)^{NbRepet-1-i})$),

chaque station (10) destinée à recevoir l'information comportant en outre :

- des moyens (36) de réception de valeurs polynomiales ($P_w((\alpha_w)^{NbRepet-1-m})$), et
- des deuxièmes moyens (38) de détermination des NbMot mots ($T_1$, $T_2$, ..., $T_{NbMot}$) à partir d'une interpolation de Lagrange des valeurs polynomiales reçues ($P_w((\alpha_w)^{NbRepet-1-m})$),
**caractérisé en ce que** chaque station (10) destinée à recevoir l'information comporte en outre des deuxièmes moyens (40) de calcul d'une information de synchronisation temporelle (t_final) avec la station destinée à émettre l'information (10), à partir des valeurs polynomiales reçues ($P_w((\alpha_w)^{NbRepet-1-m})$) et d'écarts temporels de réception entre différents paquets de données reçus ($R_m$, $0 \leq m \leq$ NbMot-1), NbRepet paquets de données *(Paquet(i),* $0 \leq i \leq$ NbRepet-1) étant propres à être émis successivement par la station destinée à émettre l'information (10).

**Patentansprüche**

**1.** Verfahren zum Übertragen einer Information zwischen einer Mehrzahl von Funk-Stationen (10), wobei jede Station (10) einen Sender (22) und einen Empfänger (20) aufweist, wobei die Information NbMot Datenwörter ($T_1$, $T_2$, ..., $T_{NbMot}$) aufweist, wobei NbMot eine ganze Zahl echt größer als 1 ist, wobei das Verfahren die folgenden Schritte aufweist:

- die Bestimmung (100) mindestens eines Polynom ($P_w(X)$, $0 \leq w \leq v$) vom Grad NbMot-1, wobei jeder der NbMot Koeffizienten des Polynoms ($P_w(X)$) zu einem jeweiligen Wort ($T_1$, $T_2$, ..., $T_{NbMot}$) gehört, wobei jedes Polynom ($P_w(X)$) eine Unbekannte (X) hat,
- die Berechnung (110) von NbRepet Polynom-Werten ($P_w((\alpha_w)^{NbRepet-1-i})$), $0 \leq w \leq v$, $0 \leq i \leq$ NbRepet-1) für das oder jedes Polynom ($P_w(X)$, $0 \leq w \leq v$), wobei NbRepet eine ganze Zahl echt größer als 1 ist, wobei jeder Polynom-Wert ($P_w((\alpha_w)^{NbRepet-1-i})$) für einen jeweiligen vorgegebenen Wert (($\alpha_w)^{NbRepet-1-i}$, $0 \leq w \leq v$, $0 \leq i \leq$ NbRepet-1) der Unbekannten (X) berechnet wird,
- das Senden (120), durch eine Funk-Station (10) zu mindestens einer anderen Funk-Station (10) von berechneten Polynom-Werten ($P_w((\alpha_w)^{NbRepet-1-i})$),
- den Empfang (130) von Polynom-Werten ($P_w((\alpha_w)^{NbRepet-1-m})$ durch die oder jede andere Funk-Stationen (10) und
- die Bestimmung (150) durch die oder jede andere Funk-Station (10) der NbMot Wörter ($T_1$, $T_2$, ..., $T_{NbMot}$) ausgehend von einer Lagrange-Interpolation der empfangenden Polynom-Werte ($P_w((\alpha_w)^{NbRepet-1-m})$), wobei das Verfahren dadurch charakterisiert ist, dass in dem Sendeschritt (120) NbRepet Datenpakete (Paket(i), $0 \leq i \leq$ NbRepet-1) hintereinander gesendet werden und dadurch, dass es außerdem einen Berechnungsschritt (140) durch die oder jede Station (10), die die Pakete empfängt, einer Information zur zeitlichen Synchronisation (t_final) mit der Funk-Station (10), die die Pakete schickt, ausgehend von den empfangenen Polynom-Werten $(P_w((\alpha_w)^{NbRepet-1-m}))$ und den zeitlichen Empfangsunterschieden zwischen den unterschiedlichen empfangenen Paketen ($R_m$, $0 \leq i \leq$ NbMot-1).

2. Verfahren gemäß Anspruch 1, in dem jedes Wort ($T_j$, $1 \leq j \leq$ NbMot) in eine Mehrzahl von Muster (($T_j)_w$, $0 \leq w \leq v$ und $1 \leq j \leq$ NbMot) zerlegt ist und mehrere Polynome ($P_w(X)$, $0 \leq w \leq v$ und $v \geq 1$) mithilfe der folgenden Gleichung bestimmt werden:

$$P_w(X) = (T_{NbMot})_w + \sum_{j=1}^{NbMot-1} (T_j)_w \times X^j$$

mit NbMot > 1, $0 \leq w \leq v$ und $v \geq 1$ und X die Unbekannte bezeichnend.

3. Verfahren gemäß Anspruch 1 oder 2, in dem die Pakete (Paket(i)) auf die folgende Weise definiert sind:

$$Paket(i) = P_0((\alpha_0)^{NbRepet}-1-i)\|..\|P_w((\alpha_w)^{NbRepet}-1-i)\|..\|P_v((\alpha_v)^{NbRepet}-1-i)$$

mit NbRepet > 1, $0 \leq i \leq$ NbRepet-1, $0 \leq w \leq v$ wobei $(\alpha_w)^{NbRepet-1-i}$ den jeweiligen vorgegebenen Wert der Unbekannten (X) zur Berechnung des entsprechenden Polynom-Werts ($P_w((\alpha_w)^{NbRepet-1-i})$) bezeichnet und || eine Aneinanderreihung von Daten symbolisiert.

4. Verfahren gemäß einem der vorhergehenden Ansprüche, in dem die NbMot Datenwörter ($T_1$, $T_2$, ..., $T_{NbMot}$) die gleiche Größe gleich N Bits haben, wobei N eine ganze Zahl echt größer 1 ist.

5. Verfahren gemäß Anspruch 4, in dem ein Wort ($T_1$) unter den Datenwörtern ($T_1$, $T_2$, ..., $T_{NbMot}$) k Bit (s) mit einem konstanten vorgegebenen Wert (CST) aufweist, wobei k eine ganze Zahl mit $1 \leq k \leq N$ ist.

6. Verfahren gemäß einem der vorhergehenden Ansprüche, in dem jedes Wort ($T_j$, $1 \leq j \leq$ NbMot) mindestens ein Muster (($T_j)_w$, $0 \leq w \leq v$ und $1 \leq j \leq$ NbMot) aufweist und das oder jedes Muster (($T_j)_w$) ein Element eines mathematischen Körpers, wie beispielsweise eines Galois-Körpers (GF($2^{a(w)}$)), aufweist.

7. Verfahren gemäß Anspruch 6, in dem jeder jeweilige vorgegebene Wert (($\alpha_w)^{NbRepet-1-i}$, $0 \leq w \leq v$, $0 \leq i \leq$ NbRepet-1), für den ein Polynom-Wert ($P_w((\alpha_w)^{NbRepet-1-i})$) berechnet wird, ein primitives Element des Galois-Körpers (GF($2^{a(w)}$)) ist.

8. Netzwerk zum Übertragen einer Information zwischen einer Mehrzahl von Funk-Stationen (10), wobei jede Station (10) einen Sender (22) und einen Empfänger (20) aufweist, wobei die Information NbMot Datenwörter ($T_1$, $T_2$, ..., $T_{NbMot}$) aufweist, wobei NbMot eine ganze Zahl echt größer als 1 ist, wobei jede zum Senden der Information vorgesehene Station (10) außerdem aufweist:

- erste Mittel (30) zur Bestimmung mindestens eines Polynoms ($P_w(X)$, $0 \leq w \leq v$) vom Grad NbMot-1, wobei jeder der NbMot Koeffizienten des Polynoms ($P_w(X)$) zu einem jeweiligen Wort ($T_1$, $T_2$, ..., $T_{NbMot}$) gehört, wobei jedes Polynom ($P_w(X)$) eine Unbekannte (X) hat,
- erste Mittel (32) zur Berechnung von NbRepet Polynom-Werten

$$(P_W((\alpha_w)^{NbRepet-1-i})), \ 0 \ \leq \ w \ \leq \ v,$$

$0 \leq i \leq$ NbRepet-1) für das oder jedes Polynom ($P_w(X)$, $0 \leq w \leq v$), wobei NbRepet eine ganze Zahl echt größer als eins ist, wobei jeder Polynom-Wert ($P_w((\alpha_w)^{NbRepet-1-i})$) für einen jeweiligen vorgegebenen Wert (($\alpha_w)^{NbRepet-1-i}$, $0 \leq w \leq v$, $0 \leq i \leq$ NbRepet-1) der Unbekannten (X) berechnet wird,

- Mittel (34) zum Senden, zu mindestens einer anderen Funk-Station (10), von berechneten Polynom-Werten $(P_w(\alpha_w)^{NbRepet-1-i})$),
wobei jede zum Empfangen vorgesehene Station (10) außerdem aufweist:

- Mittel (36) zum Empfangen von Polynom-Werten $(P_w((\alpha_w)^{NbRepet-1-m})$ und
- zweite Mittel (38) der NbMot Wörter $(T_1, T_2, ..., T_{NbMot})$ ausgehend von einer Lagrange-Interpolation der empfangenden Polynom-Werte $(P_w((\alpha_w)^{NbRepet-1-m})$, dadurch charakterisiert, dass jede zum Empfangen vorgesehene Station (10) außerdem zweite Mittel (40) zum Berechnen einer Information zur zeitlichen Synchronisation (t_final) mit der zum Senden der Informationen vorgesehenen Funk-Station (10), ausgehend von den empfangenen Polynom-Werten $(P_w((\alpha_w)^{NbRepet-1-m})$ und den zeitlichen Empfangsunterschieden zwischen den unterschiedlichen empfangenen Paketen $(R_m, 0 \le i \le NbMot-1)$ aufweist, wobei NbRepet Datenpakete (Paket(i), $0 \le i \le NbRepet-1$) dazu geeignet sind, hintereinander durch die zum Senden der Informationen vorgesehene Funk-Station (10) gesendet zu werden.

## Claims

1. A method for transmitting information between a plurality of radioelectric stations (10), each station (10) comprising a transmitter (22) and a receiver (20), the information comprising NbMot data words $(T_1, T_2, ..., T_{NbMot})$, NbMot being an integer strictly greater than 1,
the method comprising the following steps:

- determining (100) at least one polynomial $(P_w(X), 0 \le w \le v)$ of degree NbMot-1, each of the NbMot coefficients of the polynomial $(P_w(X))$ corresponding to a respective word $(T_1, T_2, ..., T_{NbMot})$, each polynomial $(P_w(X))$ having an indeterminacy (X),
- calculating (110) NbRepet polynomial values $(P_w((\alpha_w)^{NbRepet-1-i}), 0 \le w \le v, 0 \le i \le NbRepet-1)$ for the or each polynomial $(P_w(X), 0 \le w \le v)$, NbRepet being an integer strictly greater than 1, each polynomial value $(P_w((\alpha_w)^{NbRepet-1-i}))$ being calculated for a respective predetermined value $((\alpha_w)^{NbRepet-1-i}, 0 \le w \le v, 0 \le i \le NbRepet-1)$ of the indeterminacy (X),
- transmitting (120) the calculated polynomial values $(P_w((\alpha_w)^{NbRepet-1-i}))$ from one radioelectric station (10) to at least one other radioelectric station (10),
- receiving (130) polynomial values $(P_w((\alpha_w)^{NbRepet-1-m}))$ by each other radioelectric station (10), and
- determining (150), via each other radioelectric station (10), the NbMot words $(T_1, T_2, ..., TNbMot)$ from a Lagrange interpolation of the received polynomial values $(P_w((\alpha_w)^{NbRepet-1-m}))$,
the method being **characterized in that** NbRepet data packets *(Paquet(i), $0 \le i \le NbRepet-1$)* are successively transmitted during the transmission step (120), and
**in that** it further comprises a step (140) for calculating, via the or each station (10) receiving said packets, time synchronization information (t_final) for time synchronizing with the radioelectric station (10) transmitting said packets, from received polynomial values $(P_w((\alpha_w)^{NbRepet-1-m}))$ and reception time deviations between the dif-ferent received packets $(R_m, 0 \le m \le NbMot-1)$.

2. The method according to claim 1, wherein each word $(T_j, 1 \le j \le NbMot)$ is divided into a plurality of patterns $((T_j)_w, 0 \le w \le v$ and $v \ge 1, 1 \le j \le NbMot)$, and several polynomials $(P_w(X), 0 \le w \le v$ and $v \ge 1)$ are determined using the following equation:

$$P_w(X) = (T_{NbMot})_w + \sum_{j=1}^{NbMot-1} (T_j)_w \times X^j$$

with NbMot > 1, $0 \le w \le v$ and $v \ge 1$ and X designating the indeterminacy.

3. The method according to claim 1 or 2, wherein the packets *(Paquet(i))* are defined as follows:

$$Paquet(i) = P_0((\alpha_0)^{NbRepet-1-i}) \| ... \| P_w((\alpha_w)^{NbRepet-1-i}) \| ... \| P_v((\alpha_v)^{NbRepet-1-i})$$

with NbRepet > 1, $0 \le i \le NbRepet-1$, $0 \le w \le v$,

$(\alpha_w)^{NbRepet-1-i}$ designating the predetermined respective value of the indeterminacy (X) to calculate the corresponding polynomial value $(P_w((\alpha_w)^{NbRepet-1-i}))$, and
|| symbolizing a data concatenation.

4. The method according to any one of the preceding claims, wherein the NbMot data words ($T_1$, $T_2$, ..., $T_{NbMot}$) have a same size equal to N bits, N being an integer strictly greater than 1.

5. The method according to claim 4, wherein one word ($T_1$) among the NbMot data words ($T_1$, $T_2$, ..., $T_{NbMot}$) comprises k bit(s) having a predetermined constant value (CST), k being an integer with $1 \leq k \leq N$.

6. The method according to any one of the preceding claims, wherein each word ($T_j$, $1 \leq j \leq NbMot$) comprises at least one pattern $((T_j)_w$, $0 \leq w \leq v$, $1 \leq j \leq NbMot)$, and the or each pattern $((T_j)_w)$ represents an element of a mathematical field, such as the Galois field $(GF(2^{a(w)}))$.

7. The method according to claim 6, wherein each respective predetermined value $((\alpha_w)^{NbRepet-1-i}$, $0 \leq w \leq v$, $0 \leq i \leq NbRepet-1)$, for which a polynomial value $(P_w((\alpha_w)^{NbRepet-1-i}))$ is calculated is a primitive element of the Galois field $(GF(2^{a(w)}))$.

8. A network for transmitting information, the network comprising a plurality of radioelectric stations (10), each station (10) comprising a transmitter (22) and a receiver (20), the information comprising NbMot data words ($T_1$, $T_2$, ..., $T_{NbMot}$), NbMot being an integer strictly greater than 1,
   each station (10) adapted to transmit the information further comprising:

   - first means (30) for determining at least one polynomial $(P_w(X)$, $0 \leq w \leq v)$ of degree NbMot-1, each of the NbMot coefficients of the polynomial $(P_w(X))$ corresponding to a respective word ($T_1$, $T_2$, ..., $T_{NbMot}$), each polynomial $(P_w(X))$ having an indeterminacy (X),
   - first means (32) for calculating NbRepet polynomial values $(P_w((\alpha_w)^{NbRepet-1-i})$, $0 \leq w \leq v$, $0 \leq i \leq NbRepet-1)$ for each polynomial $(P_w(X)$, $0 \leq w \leq v)$, NbRepet being an integer strictly greater than 1, each polynomial value $(P_w((\alpha_w)^{NbRepet-1-i}))$ being calculated for a respective predetermined value $((\alpha_w)^{NbRepet-1-i}$, $0 \leq w \leq v$, $0 \leq i \leq NbRepet-1)$ of the indeterminacy (X), and
   - means (34) for transmitting the calculated polynomial values $(P_w((\alpha_w)^{NbRepet-1-i}))$ to at least one other radioelectric station (10),
   each station (10) adapted to receive the information further comprising:

   - means (36) for receiving polynomial values $(P_w((\alpha_w)^{NbRepet-1-m}))$, and
   - second means (38) for determining the NbMot words ($T_1$, $T_2$, ..., $T_{NbMot}$ from a Lagrange interpolation of the received polynomial values $(P_w((\alpha_w)^{NbRepet-1-m}))$, **characterized in that** each station (10) adapted to receive the information further comprises second means (40) for calculating time synchronization information (t_final) for time synchronizing with the station (10) adapted to transmit the information, from the received polynomial values $(P_w((\alpha_w)^{NbRepet-1-m}))$ and reception time deviations between different received data packets ($R_m$, $0 \leq m \leq NbMot-1$), NbRepet data packets (*Paquet*(i), $0 \leq i \leq NbRepet-1$) being able to be successively transmitted by the station (10) adapted to transmit the information.

FIG.1

FIG.2

FIG.3

Détermination du ou des polynômes de degré NbMot −1 ⌐100

Calcul de NbRepet valeurs polynomiales pour chaque polynôme ⌐110

Emission de paquets contenant les valeurs polynomiales calculées ⌐120

Réception des valeurs polynomiales ⌐130

Calcul d'une information de synchronisation temporelle ⌐140

Détermination des NbMot mots de la trame par interpolation de language ⌐150

## FIG.4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2898000 A1